# EUROPEAN PATENT SPECIFICATION

(11) **EP 1 591 321 B1**
(45) Date of publication and mention of the grant of the patent: **11.07.2007**
(21) Application number: 05008500.0
(22) Date of filing: 19.04.2005
(51) Int. Cl.: B60R 21/01, H01H 3/14, B60Q 1/06, B60Q 1/115

(54) **Sitting sensor for vehicle**
Sitzbelegungssensor
Capteur de siège de véhicule

(30) Priority: 28.04.2004 JP 2004134458
(43) Date of publication of application: 02.11.2005
(73) Proprietor: DENSO CORPORATION, Kariya-city, Aichi-pref. 448-8661 (JP)
(72) Inventor: Saitoh, Yukihiro, Kariya-city Aichi-pref., 448-8661 (JP); Taguchi, Masahiro, Kariya-city Aichi-pref., 448-8661 (JP); Yamanaka, Shoichi, Kariya-city Aichi-pref., 448-8661 (JP)
(74) Representative: Kuhnen & Wacker

(56) References cited:
- EP-A- 1 491 408
- EP-A- 1 533 193
- WO-A-97/10115
- WO-A-99/55560
- DE-A1- 19 802 099
- US-A- 3 859 485
- US-A- 5 161 875
- US-A1- 2002 021 136
- US-B1- 6 393 133
- PATENT ABSTRACTS OF JAPAN vol. 2000, no. 01, 31 January 2000 (2000-01-31) & JP 11 297153 A (FUJIKURA LTD), 29 October 1999 (1999-10-29)
- PATENT ABSTRACTS OF JAPAN vol. 1998, no. 06, 30 April 1998 (1998-04-30) & JP 10 039045 A (TOYOTA MOTOR CORP), 13 February 1998 (1998-02-13)

## Description

The present invention relates to a sitting sensor according to claim 1.

From US-A-3 859 485 a sitting sensor for detecting a sitting on a seat of a vehicle according to the preamble of claim 1 is known.

According to this known sitting sensor some pads define a parallel switch unit, wherein these two parallel switch units are arranged in series.

Generally, a sitting sensor is buried in a seat of a vehicle to detect a sitting of a passenger. The sitting sensor includes multiple electrically conductive traces (pattern) and a film switch, which are arranged at a film made of, for example, a resin. The electrically conductive pattern constructs an electrically conductive circuit for supplying power for the film switch, which becomes ON/OFF responding to a sitting load applied to it. The terminal portion of the electrically conductive pattern constructs a connector terminal, which will be inserted into a connector of the side of the vehicle.

For example, referring to JP-11-297153A, the sitting sensor is provided with a built-in disconnection-detecting resistance for detecting an inner disconnection thereof.

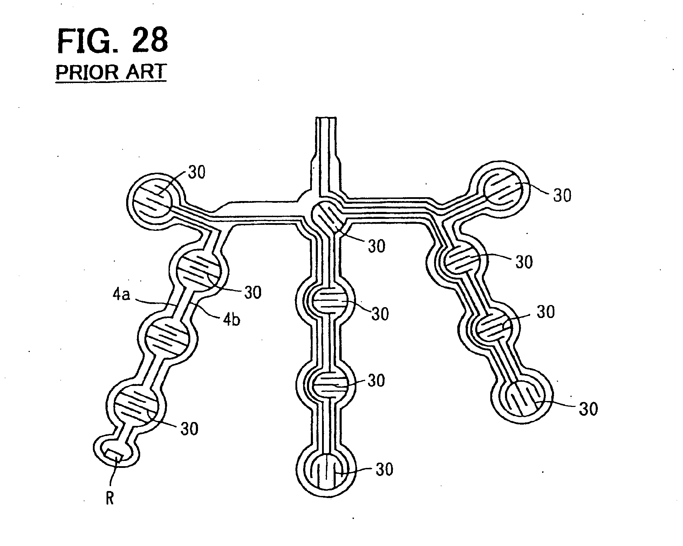

As shown in Fig. 28, this sitting sensor includes a positive power wire (conductor) 4a, a negative power wire (conductor) 4b, multiple contact electrode pairs 30, and a disconnection-detecting resistance R, which are arranged at the upper side of a lower film mounted at the sitting surface of the seat. The positive power wire 4a and the negative power wirde 4b are arranged to be substantially parallel with each other, and separately wind on the whole to be extensively distributed on the sitting surface. The positive power wire 4a and the negative power wire 4b are separated from each other at a predetermined distance. The disconnection-detecting resistance R is connected with the terminals of the positive and negative power wires 4a, 4b.

The multiple contact electrode pairs 30 are constructed of the branches of the positive and negative power wires 4a, 4b at multiple positions of the positive power wire 4a (negative power wire 4b). Specifically, at the each position, the comb-teeth-shape branch of the positive power wire 4a faces the comb-teeth-shape branch of the negative power wire 4b to construct the contact electrode pair 30, being a fixed contact point portion.

An upper film is arranged at the upper side of the lower film, and a spacer film (made of, for example, resin) is partially disposed therebetween. An electrically conductive pattern is printed at the lower side of the upper film corresponding to the part where the spacer film is not arranged. The electrically conductive pattern constructs floating contact point portions.

Thus, when a passenger sits on the seat, the floating contact point portions contact the contact electrode pairs 30, so that the positive power wire 4a is short-circuit connected with the negative power wire 46. Then, the sitting of the passenger is detected. That is, with reference to an equivalent circuit of the sitting sensor, the contact electrode pairs 30 and the floating contact point portions construct multiple film switches, which are connected with the disconnection-detecting resistance R in parallel.

In the case where there is no disconnection occurring in the positive power wire 4a and the negative power wire 4b, the electrical resistance (resistance) between the terminals of the positive and negative power wires 4a, 4b (i.e., between terminals of connecter of sitting sensor) is equal to the resistance of the disconnection-detecting resistance R in a non-sitting of the seat, and has a significantly small resistance when the film switches are closed (ON) due to a sitting. Here, the wiring resistances of the positive and negative power wires 4a, 4b are ignored.

On the other hand, in the case where there is a partial disconnection occurring in the positive power wire 4a or/and the negative power wire 4b, the resistance between the terminals of the connector of the sitting sensor will have an approximately infinite value. Thus, the disconnection in the positive and negative power wires 4a, 4b can be readily detected.

In the sitting sensor having the disconnection-detecting resistance, a fault (OFF-fault), which is mainly caused by a disconnection of the electrically conductive wire (power wire), can be detected. However, when an ON-fault occurs in the sitting sensor, that is, the floating contact point portion becomes to constantly contact the contact electrode pair to constantly output an ON-signal, the ON-fault cannot be detected. Therefore, this sitting sensor cannot detect a sitting with a high reliability with respect to the ON-fault.

In view of the above-described problems, it is an object of the present invention to provide a sitting sensor having a simple construction for a vehicle seat to detect a sitting thereon with a high reliability

This object is achieved by the features of claim 1.

According to an aspect of the present invention, a sitting sensor for detecting a sitting on a seat of a vehicle includes a positive conductive wire, a negative conductive wire, and a switch group including a plurality of switches, which are distributed on a sitting surface of the seat and become ON/OFF responding to a sitting load on the seat. The switches are supplied with power through the positive conductive wire and the negative conductive wire. At least one of the switches is connected with at least one of the other switches in series.

Therefore, the sitting sensor outputs a signal indicating a sitting on the seat only in the case where all of the switches which are connected with each other in series become ON. That is, even if one of the switches which are connected with each other in series has an ON-fault, the sitting sensor can still appropriately detect a sitting on the seat through the other switch. Accordingly, the sitting sensor can detect the sitting with a higher reliability with respect to an ON-faulty of the switches.

According to another aspect of the present invention, a sitting sensor for a seat of a vehicle has a positive conductive wire unit, a negative conductive wire unit, a switch group including a plurality of switches which are distributed on a sitting surface of the seat and become ON/OFF responding to a sitting load thereon, a lower film and an upper film which is disposed at an upper side of the lower film and partially electrically insulated from the lower film. The switches are supplied with power through the positive conductive wire unit and the negative conductive wire unit. The positive conductive wire unit is connected with lower contact point portions of the switches, and the negative contradictive wire unit is connected with the upper contact point portions of the switches. The positive conductive wire unit and the lower contact point portions of the switches are formed at the lower film. The negative conductive wire unit and the upper contact point portions of the switches are formed at the upper film. At least one of the negative conductive wire unit and the positive conductive wire unit includes at least two conductive wires, which are separately connected with different external terminals to respectively output signals of the different switches.

Thus, a sitting on the seat can be independently detected through different external terminals (by different sitting detection systems in practice). Then, in the case where the state of one of the terminals (one of detection systems) is not changed while a predetermined time has past after the state of the other one changed, it will be determined that the switch connected with the terminal which state does not change has a fault. Then, the signal from the switch connected with the other terminal will be set as an output of the sitting sensor. Accordingly, the sitting can be detected with a high reliability, even if the switch connected with one of the terminals (sitting detection systems) has an ON-faulty or an OFF-faulty.

The above and other objects, features and advantages of the present invention will become more apparent from the following detailed description made with reference to the accompanying drawings, in the drawings:
FIG. 1 is a schematic plan view showing a sitting sensor mounted on a sitting surface of a seat according to a first embodiment of the present invention;
FIG. 2 is cross-sectional view taken along a line II-II in FIG. 1;
FIG. 3 is a disassembled plan view showing a lower film of the sitting sensor in FIG. 1;
FIG. 4 is a disassembled plan view showing an upper film of the sitting sensor in FIG. 1;
FIG. 5 is a diagram showing an equivalent circuit of the sitting sensor in FIGS. 3 and 4;
FIG. 6 is a longitudinal cross-sectional view showing a switch member of the sitting sensor in a non-sitting according to the first embodiment;
FIG. 7 is a longitudinal cross-sectional view showing the switch member of the sitting sensor in a sitting according to the first embodiment;
FIG. 8 is a disassembled partial plan view showing a lower film of a sitting sensor according to a second embodiment of the present invention;
FIG. 9 is a disassembled partial plan view showing an upper film of the sitting sensor according to the second embodiment;
FIG. 10 is a diagram showing an equivalent circuit of the sitting sensor according to the second embodiment;
FIG. 11 is a disassembled partial plan view showing a lower film of a sitting sensor according to a third embodiment of the present invention;
FIG. 12 is a disassembled partial plan view showing an upper film of the sitting sensor according to the third embodiment;
FIG. 13 is a diagram showing an equivalent circuit of the sitting sensor according to the third embodiment;
FIG. 14 is a disassembled plan view showing an upper film of a sitting sensor according to a fourth embodiment of the present invention;
FIG. 15 is a disassembled plan view showing a lower film of the sitting sensor according to the fourth embodiment;
FIG. 16 is a diagram showing an equivalent circuit of the sitting sensor according to the fourth embodiment;
FIG. 17 is a disassembled plan view showing an upper film of a sitting sensor according to a fifth embodiment of the present invention;
FIG. 18 is a disassembled plan view showing a lower film of the sitting sensor according to the fifth embodiment;
FIG. 19 is a diagram showing an equivalent circuit of the sitting sensor according to the fifth embodiment;
FIG. 20 is a disassembled partial plan view showing a lower film of a sitting sensor according to a sixth embodiment of the present invention;
FIG. 21 is a disassembled partial plan view showing an upper film of the sitting sensor according to the sixth embodiment;
FIG. 22 is a diagram showing an equivalent circuit of the sitting sensor according to the sixth embodiment;
FIG. 23 is a schematic block diagram showing a headlamp optic axis adjustment device according to a seventh embodiment of the present invention;
FIG. 24 is a schematic plan view showing a sitting sensor with a first modification according to other embodiments of the present invention;
FIG. 25 is a schematic plan view showing a sitting sensor with a second modification according to the other embodiments;
FIG. 26 is a schematic plan view showing a sitting sensor with a third modification according to the other embodiments;
FIG. 27 is a schematic plan view showing a sitting sensor with a fourth modification according to the other embodiments; and
FIG. 28 is a plan view showing a sitting sensor according to a prior art.

The preferred embodiment will be described with reference to the accompanying drawings.

### [FIRST EMBODIMENT]

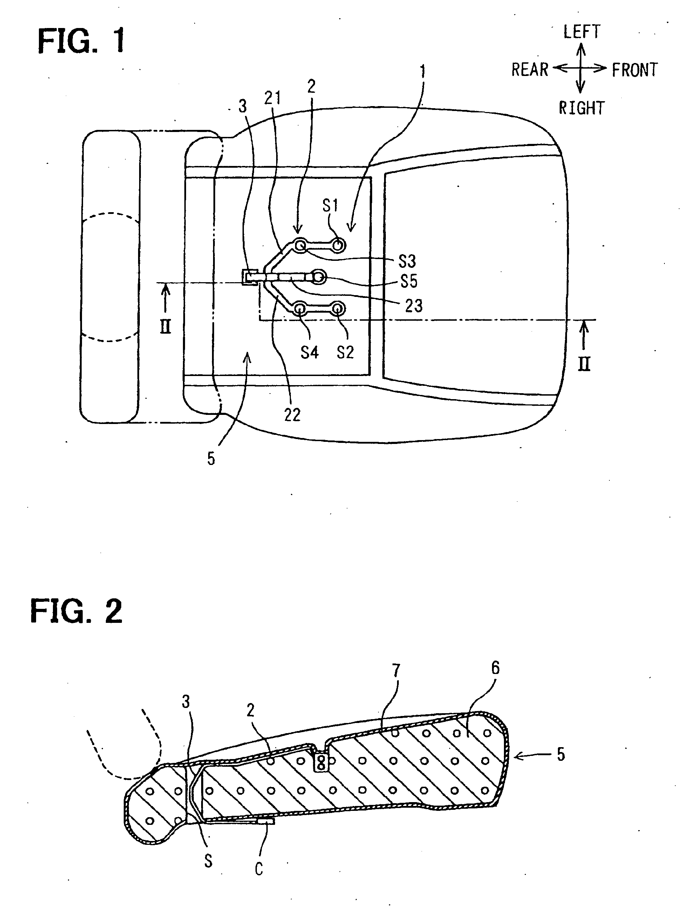

A first embodiment of the present invention will be described referring to FIGS. 1-7. As shown in FIG. 1, a sitting sensor 1 for a vehicle is mounted on a sitting surface of a seat 5. The sitting sensor 1, being formed by a stamping of a film, has a sensor member 2 branched into three portions and a wiring member 3 extending from the root of the sensor member 2.

The sensor member 2 includes a left branch wiring portion 21 (left wiring portion 21) provided with two switches S1 and S3, a right branch wiring portion 22 (right wiring portion 22) provided with two switches S2 and S4, and a central branch wiring portion 23 (central wiring portion 23) provided with a switch S5.

The seat 5 is provided with a cushion 6, which is wrapped in a sheet cover 7 made of, for example, a cloth or a hide. The sitting sensor 1 (sensor member 2 and part of wiring member 3) is arranged on the cushion 6 and enveloped by the sheet cover 7.

Most of the wiring member 3 extends downward through a gap S in the cushion 6 to the bottom surface of the sheet cover 7, to be attached to a connecter C fixed to the bottom surface.

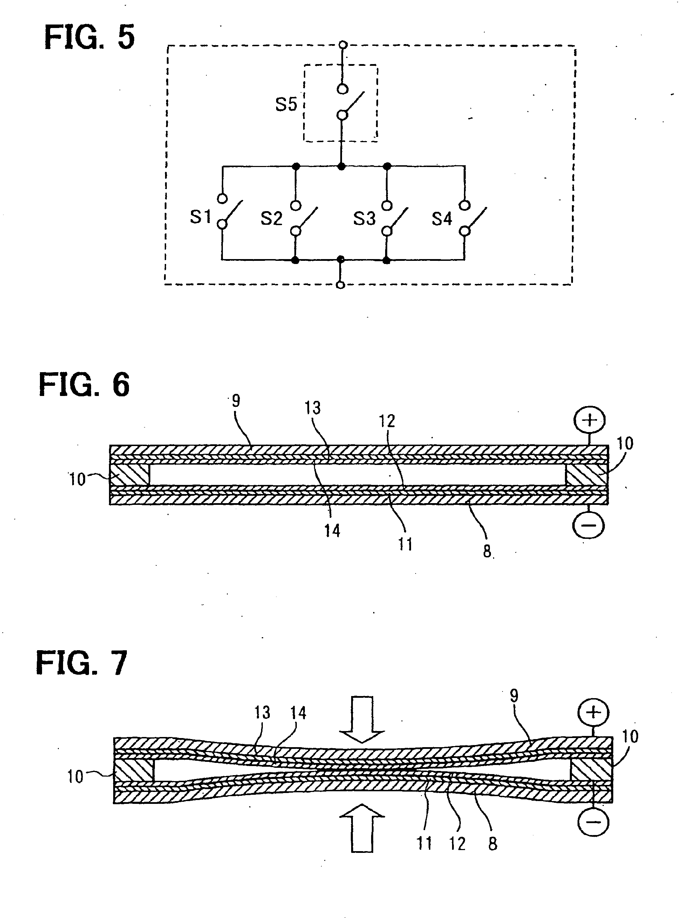

Referring to FIG. 6, the sitting sensor 1 is constructed of a lower film 8 (first film), an upper film 9 (second film), a spacer film 10 (made of resin, for example) which is electrically insulating and sandwiched between the lower film 8 and the upper film 9, electrically conductive layers 11, 12 arranged at the upper side of the lower film 8 by printing, and electrically conductive layers 13, 14 arranged at the lower side of the upper film 9 by printing. The electrically conductive layers 11, 13 are formed by silver paste, and the electronically conductive layers 12, 14 are formed by carbon paste.

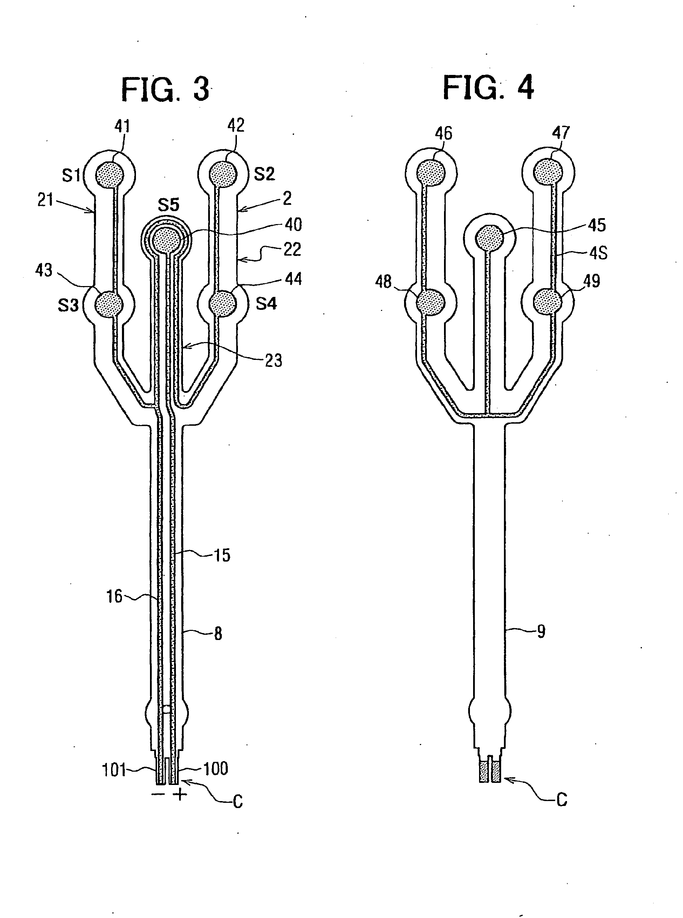

As shown in FIG. 3, the electrically conductive layers 11 and 12 of the lower film 8 construct a positive eclectically-conductive wire 15 (positive conductive wire 15), a negative electrically-conductive wire 16 (negative conductive wire 16), and lower contact point portions 40-44 (contact point portions) of the switches S1-S5. The lower contact point portions 40-44 are electrically connected with the positive and negative conductive wires 15, 16.

Similarly, as shown in FIG. 4, the electrically conductive layers 13, 14 of the upper film 9 construct a short-circuit eclectically conductive wire 4S (floating conductive wire) and upper contact point portions 45-49 (floating contact point portions) of the switches S1-S5. The upper contact point portions 45-49 are electrically connected with the short-circuit eclectically conductive wire 4S (short-circuit conductive wire 4S).

Referring to FIG. 3, the terminal of the positive conductive wire 15 is exposed to construct a connection terminal 100, which is electrically connected with one of the terminals of the connecter C. Similarly, the terminal of the negative conductive wire 16 is exposed to construct a connection terminal 101, which is electrically connected with the other terminal of the connecter C. Thus, the sitting sensor 1 is supplied with power through the positive and negative conductive wires 15, 16.

As shown in FIGS. 6 and 7, the lower film 8 (referring to FIG. 3) and the upper film 9 (referring to FIG. 4) are to be overlapped with each other, while the spacer film 10 having an opening is sandwiched therebetween. Then, the lower contact point portions 41-44, 40 are separately faced to the upper contact point portions 47, 46, 49, 48 and 45 to construct the switches S1-S5, respectively. The switches S1-S5 are normally-open switches (normally-OFF switches). The lower and upper contact point portions 40-49 of the switches S1-S5, the short-circuit conductive wire 4S, the positive and negative conductive wires 15, 16 are indicated as shown in FIGS. 3 and 4 to become definite.

Specifically, when one of the lower contact point portions 40-44 (constructed by electrically conductive layer 12) contacts the corresponding one of the upper contact points portion 45-49 (constructed by electrically conductive layer 13) due to a sitting load exerted on the seat 5, the corresponding one of the switches (S1-S5) will become electrically continuous (i.e., become ON). In this case, the part of the negative conductive wire 16, which is disposed around the low contact point portion 40 of the switch S5, is separated from the upper contact point portion 45 thereof.

With reference to FIG. 5 showing an equivalent circuit of the sitting sensor 1, the switches S1-S4 are connected with each other in parallel to construct a parallel switch unit, which is connected with the switch 5 in series. When the switch S5 and one of the switches S1-S4 become ON, electric current will sequentially flow from the positive conductive wire 15, the lower contact point portion 40, the upper contact point portion 45, the short-circuit conductive wire 4S and the one of the switches S1-S4, to the negative conductive wire 16. Then, the sitting sensor 1 becomes ON, that is, in a short-circuit state.

On the other hand, when the switch S5 is OFF and/or all of the switches S1-S4 are OFF, the electric current through the sitting sensor 1 will be interrupted. Then, the sitting sensor 1 is OFF, that is, in an open-circuit state.

In this case, the parallel switch unit and the switch S5 are respectively called as a main sensor and a sub sensor (or series switch unit).

Next, the manufacture of the sitting sensor 1 is described. The manufacture can be the same with that of a general sitting sensor having a disconnection-detecting resistance.

The upper and lower films 9, 8 are made of a polyethylene naphthalate (PEN) film. The electrically-conductive layers 11, 12 and the electrically-conductive layers 13, 14 are respectively paste-printed on the lower film 8 and the upper film 9. Thereafter, the spacer film 10 is bonded to (sandwiched between) the lower and upper films 8, 9, to construct a complex film with a large length, for example. Then, the complex film is stamped to form the sitting sensor 1 having the shape shown in FIG. 1. In this case, the upper film 9 is partially eliminated at the positions corresponding to the terminals of the positive and negative conductive wires 15, 16. Then, the sitting sensor 1 with such a construction is to be attached to the seat 5.

According to the first embodiment, even if one of the switches S1-S4 has an ON-fault, that is, becomes constantly closed independently of a sitting on the seat 5, the sitting sensor 1 can appropriately detect whether or not there is a sitting on the seat 5 through the switch S5. That is, the sitting sensor 1 outputs a signal indicating a sitting on the seat 5 only in the case where the switch S5 also becomes ON responding to the sitting. Similarly, the sitting can be also properly detected by the switches S1-S5, even when the switch S5 has a fault to become normally-ON (constantly closed) independently of the sitting.

Thus, a sitting on the seat 5 can be detected with a higher reliability with respect to an ON-fault of the sitting sensor 1 (switches S1-S5). Moreover, the switch S5 is surrounded by the switches S1-S4 and arranged at an approximately central portion of the sitting surface of the seat 5, so that the influence of a passenger sitting position deviation (from central portion) on the detection of the sitting can be restricted.

### [SECOND EMBODIMENT]

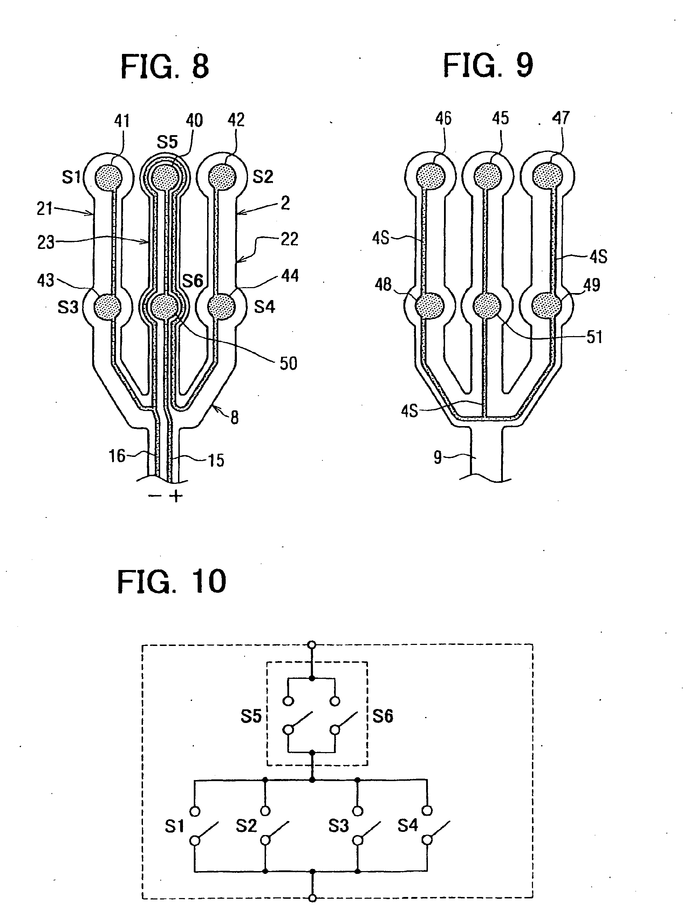

A second embodiment of the present invention will be described referring to FIGS. 8-10. In this embodiment, a lower contact point portion 50 is additionally connected with the positive conductive wire 15, and an upper contact point portion 51 is additionally connected with the short-circuit conductive wire 4S, as compared with the above-described first embodiment (referring to FIGS. 3 and 4).

That is, a switch S6 constructed of the upper and lower contact point portions 51, 50 is added to the central wiring portion 23. FIG. 10 shows an equivalent circuit of the sitting sensor 1. In this case, the switches S1-S4 are connected with each other in parallel to construct a first parallel switch unit (main sensor). The switches S5 and S6 are connected with each other in parallel to construct a second parallel switch unit (sub sensor). The second parallel switch unit is connected with the first parallel switch unit in series.

According to this embodiment, the sitting sensor 1 will output an ON-signal corresponding to a sitting on the seat 5, in the case where one of the switches S5, S6 and one of the switches S1-S4 become ON. Therefore, the sitting sensor 1 can maintain an appropriate detection through the switch S6 (switch S5), even when the switch S5 (switch S6) becomes normally-OFF (constantly open) independently of a sitting on the seat 5. Accordingly, the sitting sensor 1 can detect a sitting with a higher reliability with respect to an OFF-fault of the switch S5 or S6.

The construction of the sitting sensor 1 which has not been described in this embodiment is the same with that in the first embodiment.

### [THIRD EMBODIMENT]

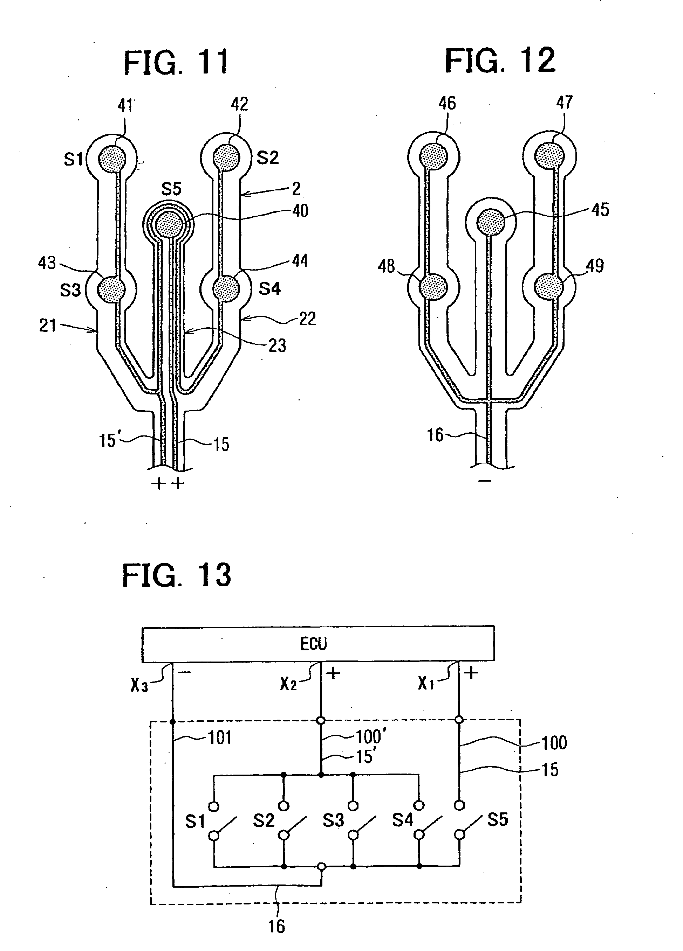

A third embodiment of the present invention will be described referring to FIGS. 11-13. According to this embodiment, a second positive conductive wire 15' (referring to FIG. 11) is used instead of the negative conductive wire 16 in FIG. 3 described in the first embodiment, and the negative conductive wire 16 (referring to FIG. 12) is used instead of the short-circuit conductive wire 4S in FIG. 4 described in the first embodiment.

FIG. 13 shows an equivalent circuit of the sitting sensor 1 according to the third embodiment. In this case, the positive conductive wire 15 (first positive conductive wire 15) is connected with a terminal X1 of a vehicle ECU through the terminal 100 of the first positive conductive wire 15. The second positive conductive wire 15' is connected with a terminal X2 of the vehicle ECU through a terminal 100' of the second positive conductive wire 15'. The negative conductive wire 16 is connected with a terminal X3 of the vehicle ECU through the terminal 101 of the negative conductive wire 16.

Thus, according to this embodiment, direct current (through load resistance) between the terminals X3 and X2 can be supplied independently of that between the terminals X3 and X1. That is, a sitting on the seat 5 can be practically detected by different sitting detection systems. Specifically, the sitting can be independently detected by the switch S5 (sub sensor) or one of the switches S1-S4 (main sensor).

In the case where the state of one of the terminals X1 and X2 does not change while a predetermined time has past after the state of the other one changed, the vehicle ECU determines that the switch connected with the terminal which state does not change has a fault. Then, the signal from the switch connected with the other terminal will be set as an output of the sitting sensor 1.

Accordingly, a signal which appropriately corresponds to a sitting of the seat 5 can be output through the terminal X3 and at least one of the terminals X1, X2, unless both the switch S5 and one of the switches S1-S4 have an ON-fault (become constantly closed). Thus, a sitting on the seat 5 can be appropriately detected.

In this embodiment, the first and second positive conductive wires (15, 15') construct a positive conductive wire unit, and the negative conductive wire (16) constructs a negative conductive wire unit. The negative conductive wire unit can also include multiple negative conductive wires while the positive conductive wire unit includes one or multiple positive conductive wires, so that the sitting can be also independently detected by different sitting detection systems.

The construction of the sitting sensor 1 which has not been described in this embodiment is the same with that in the first embodiment.

### [FOURTH EMBODIMENT]

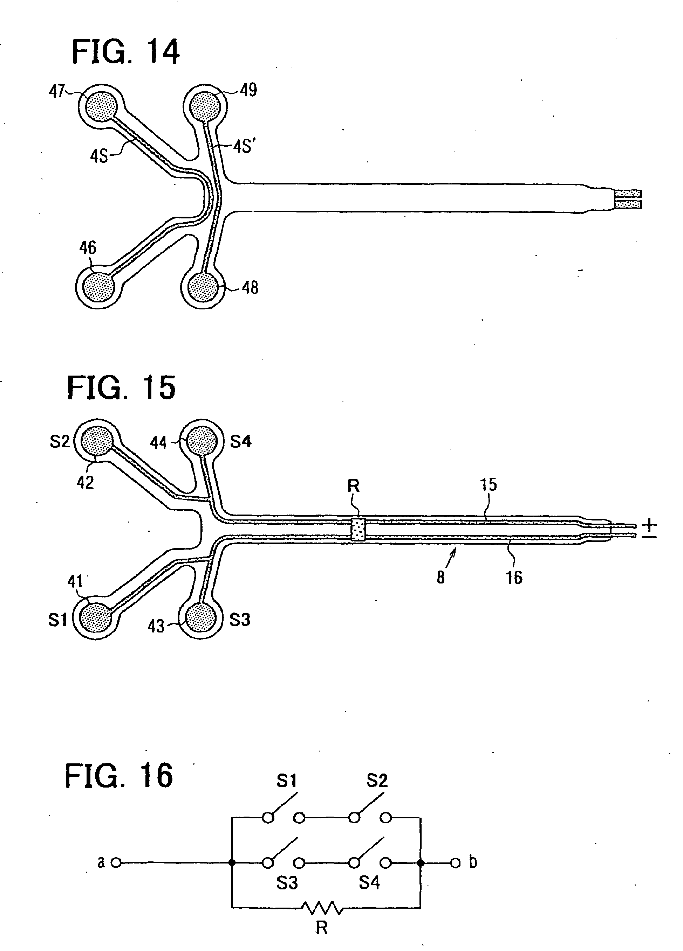

A fourth embodiment of the present embodiment will be described referring to FIGS. 14-16. In this case, the central wiring portion 23 and the switch S5 (referring to FIGS. 3 and 4) described in the first embodiment are omitted.

Referring to FIG. 15, the lower contact point portions 42, 44 at the lower film 8 are connected with the positive conductive wire 15, and the lower contact point portions 41, 43 at the lower film 8 are connected with the negative conductive wire 16. Referring to FIG. 14, the upper contact point portions 46 and 47 at the upper film 9 are connected to each other through the short-circuit conductive wire 4S, while the upper contact point portions 48 and 49 at the upper film 9 are connected to each other through a short-circuit electrically conductive wire 4S' (short-circuit conductive wire 4S').

FIG. 16 shows an equivalent circuit of the sitting sensor 1 according to the fourth embodiment. In this case, the switches S1 and S2 are connected with each other in series to construct a first series switch unit. The switches S3 and S4 are connected with each other in series to construct a second series switch unit. An OFF-faulty (disconnection) detecting resistance R, the first series switch unit and the second series switch unit are connected with each other in parallel.

Therefore, according to this embodiment, the sitting sensor 1 will become ON in the case where both the switches S1 and S2 are ON, or both the switches S3 and S4 are ON. Accordingly, even when one of the switches (S1-S4) has an ON-fault, a false detection of the sitting can be restricted by the other switch of the same series switch group.

Moreover, in the case where the connecter C has a disconnection or the like to cause an OFF-fault, the voltage drop of the OFF-faulty detecting resistance R will disappear. Thus, the OFF-faulty (disconnection) can be readily detected by a detection of the voltage drop disappearance.

The construction of the sitting sensor 1 which has not been described in this embodiment is the same with that in the first embodiment.

### [FIFTH EMBODIMENT]

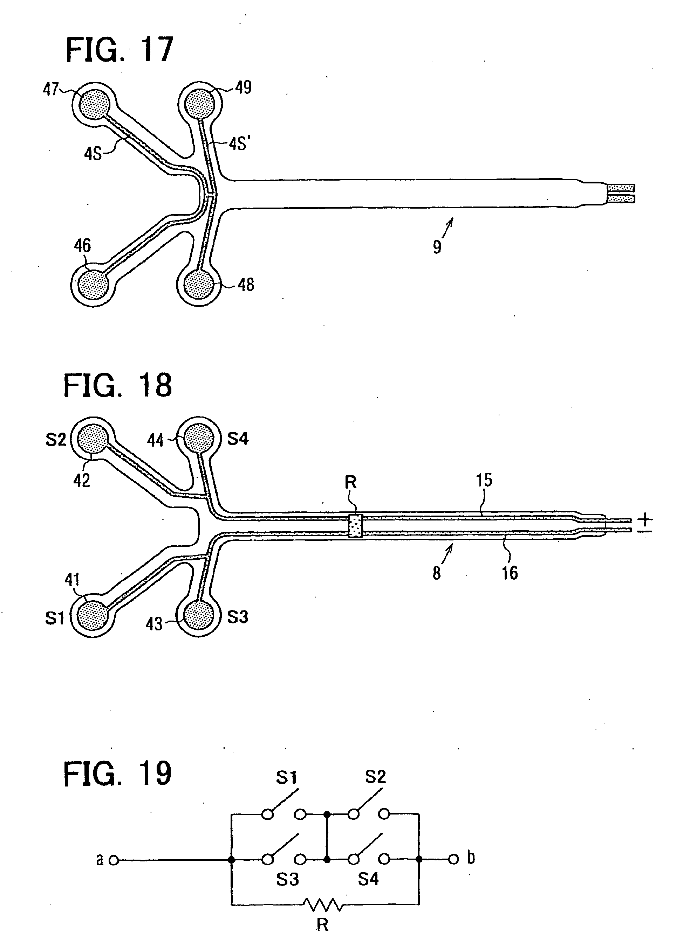

A fifth embodiment of the present invention will be described with reference to FIGS. 17-19. In this case, the short-circuit conductive wires 4S and 4S' (referring to FIG. 17) are short-circuit connected with each other, as compared with those in the above-described fourth embodiment (referring to FIGS. 14).

Referring an equivalent circuit showing in FIG. 19, the sitting sensor 1 can maintain an appropriate detection of a sitting on the seat 5, unless at least one of the switches S1, S3 and at least one of the switches S2, S4 have an ON-fault to cause an ON-fault of the sittng sensor 1.

The construction of the sitting sensor 1 which has not been described in this embodiment is the same with that in the fourth embodiment.

### [SIXTH EMBODIMENT]

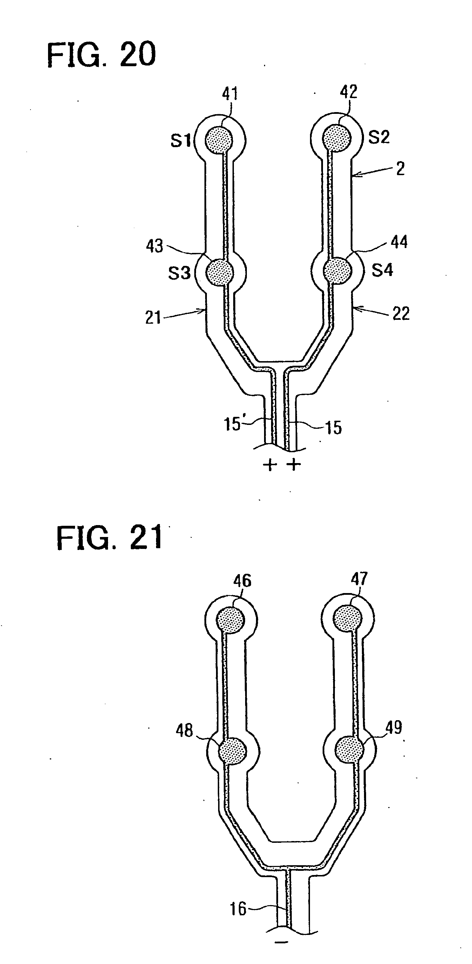

A sixth embodiment will be described referring to FIGS. 20-22.

According to this embodiment, the central wiring portion 23 and the switch S5 (referring to FIGS. 11 and 12) in the above-described third embodiment are omitted. Thus, referring to FIG. 20, the switches S1 and S3 are connected with the second positive conductive wire 15', and the switches S2 and S4 are connected with the positive conductive wire 15.

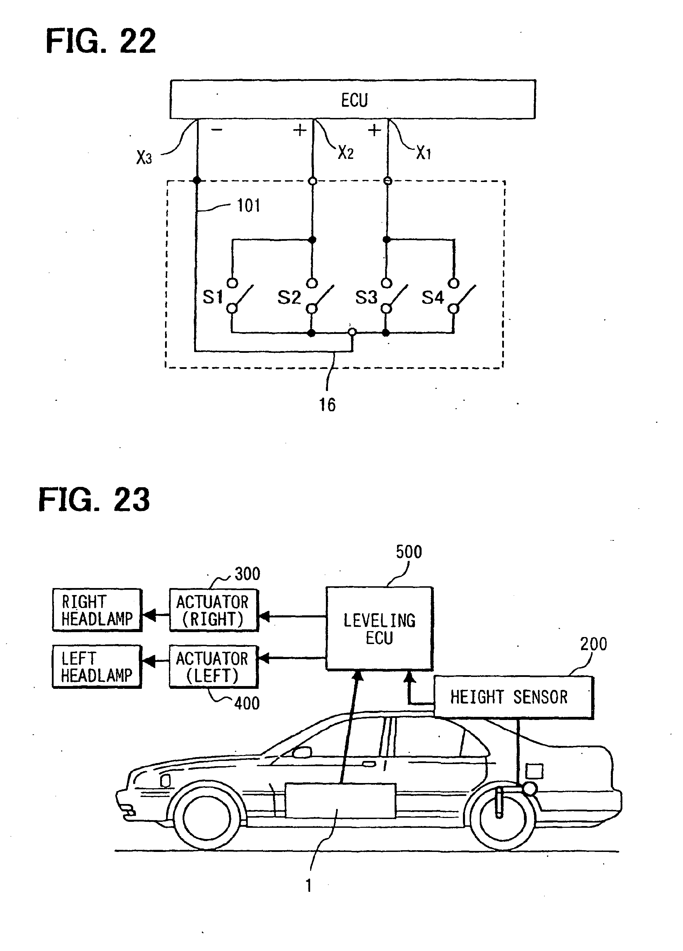

With reference to FIG. 22 showing an equivalent circuit of the sitting sensor 1, direct current (through load resistance) between the terminals X1 and X3 can be supplied independently of that between the terminals X2 and X3. Therefore, a sitting of the seat 5 can be independently detected by the switches S1, S2 or the switches S3, S4.

Similar to the third embodiment, in the case where the state of one of the terminals X1 and X2 does not change while a predetermined time has past after the state of the other changed, the vehicle ECU determines that the switch connected with the terminal which state does not change has a fault. Then, the signal from the switch connected with the other terminal which has a changed state will be set as an output of the sitting sensor 1.

Accordingly, at least one of the terminals X1 and X2 can output signal which appropriately corresponds to a sitting on the seat 5, unless at least one of the switch S1, S2 and at least one of the switches S3, S4 have an ON-fault. Thus, a sitting on the seat 5 can be detected with a higher reliability.

The construction of the sitting sensor 1 which has not been described in this embodiment is the same with that in the third embodiment.

### [SEVENTH EMBODIMENT]

A seventh embodiment will be described referring to FIG. 23. In this case, the sitting sensor 1 based on the above-described first-sixth embodiments is suitably used in an optical axis adjustment device for headlamps of the vehicle.

According to this embodiment, the sitting sensor 1 is attached to an assistant seat (not shown) of the vehicle. The optical axis adjustment device includes a height sensor 200 for detecting an up-down direction displacement of rear tires, and a leveling ECU 500, which controls actuators 300 and 400 based on the outputs of the sitting sensor 1 and the height sensor 200. Here, the actuators 300 and 400 respectively rotate the optical axes of the right and left headlamps in a vertical plane.

Accordingly, the leveling ECU 500 can separately adjust the optical axes of the left and right headlamps, according to not only the up-down direction displacement of the rear tires (vehicle rear portion) but also a sitting state on the assistant seat. Thus, the optical axes of the headlamps can be detected with a high accuracy.

Because the sitting sensor 1 is originally attached to the assistant seat for detecting whether or not a seatbelt thereof is worn, it is unnecessary to attach an additional sitting sensor for adjusting the optical axis of the headlamp. Therefore, the optical axis adjustment device with the sitting sensor 1 can be provided for the vehicle without significantly increasing cost.

As described above, the sitting sensor 1 based on the first-sixth embodiments is also suitably used in a seatbelt-wearing alarm device.

### [OTHER EMBODIMENTS]

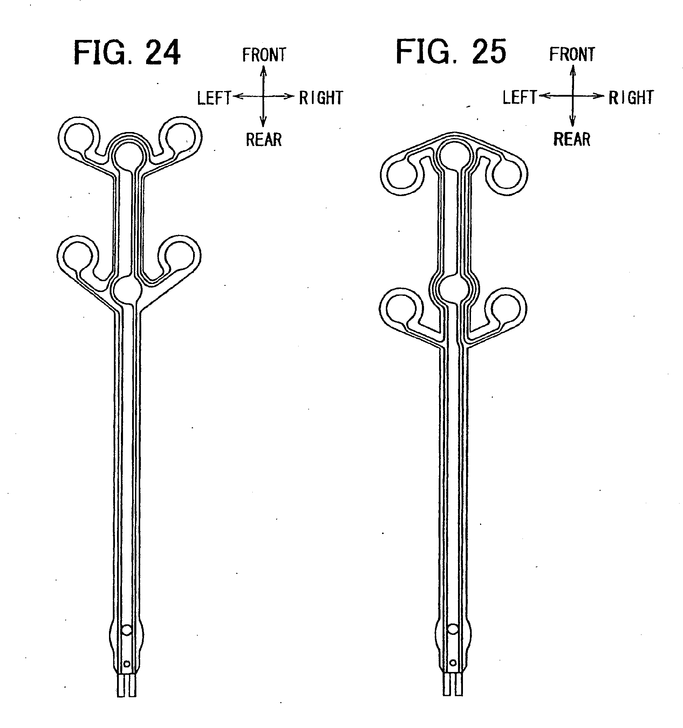

The switches S5 and S6 described in the second embodiment referring to FIG. 8 can be also displaced in the vehicle front-rear (longitudinal) direction. For example, with reference to FIG. 24, the two switches (corresponding to switches S5 and S6 in FIG. 8), which are respectively arranged at the middle positions with respect to the right and left switches (corresponding to switches S1-S4 in FIG. 8), are displaced toward the vehicle rear side. In contrast, FIG. 25 shows that the switches corresponding to the switches S5 and S6 are displaced toward the vehicle front side.

Moreover, in the first embodiment referring to FIG. 3, the switch S5 (series switch unit) is arranged at the middle position (vehicle right-left direction) with respect to the switches S1-S4 of the parallel switch unit. Alternatively, the switch S5 can be also arranged at the outer side (vehicle right-left direction) of the switches S1-S4 Of the parallel switch unit. In this case, the distance between the series switch S5 and one of the switches S1-S4 of the parallel switch unit can be set smaller than that between two (adjacent to each other) of the switches S1-S4 of the parallel switch unit.

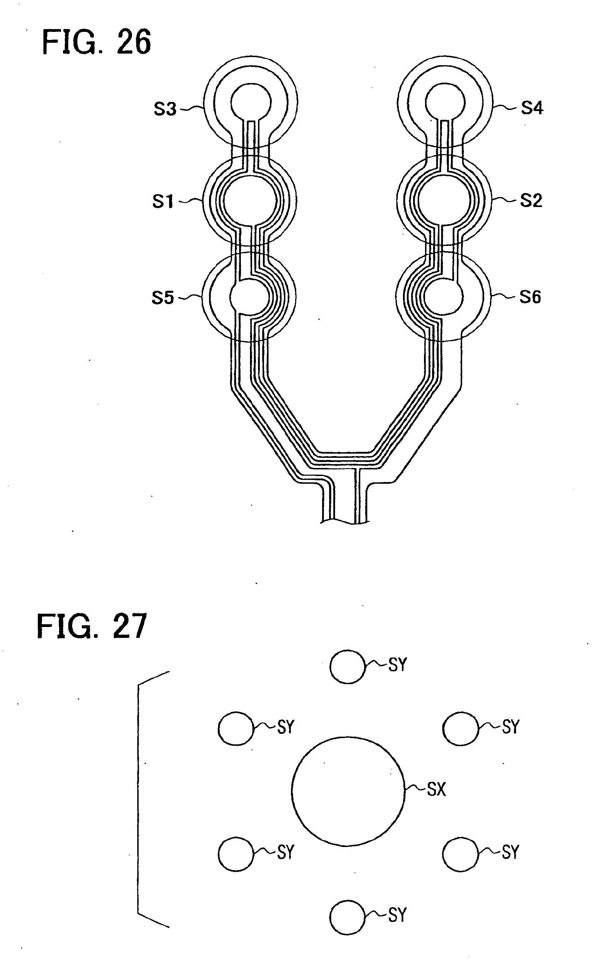

Furthermore, the sensor member 2 of the sitting sensor 1 can be also branched into two parts, each of which is provided with three switches, referring to FIG. 26. In this case, the switches S3-S6 are connected with each other in parallel to construct a parallel switch unit, while the switches S1 and S2 are also connected with each other in parallel to construct a second parallel switch unit having fewer switches and regarded as a series switch unit. Here, the distance between one of the switches S1, S2 and one (adjacent to the one of switches S1, S2) of the switches S3-S6 is set smaller than that between two (adjacent to each other) of the switches S3-S6. Thus, the sitting-detection error of the series switch unit can be reduced.

Moreover, the sitting sensor 1 can also have a switch construction shown in FIG. 27, which is the substantially same with that shown in FIGS. 8 and 9. Referring to FIG. 27, the switch SX of the series switch unit is set to have a larger area than the switches SY of the parallel switch unit. Thus, the switch SX has a smaller load threshold value than the switch SY of the parallel switch unit. Furthermore, because the switch SX of the series switch unit has the larger area, the influence of a sitting position change of a passenger on a sitting detection can be also reduced. Accordingly, the switch SX has a substantially higher sensitivity than the switches SY of the parallel switch unit, thus reducing a false sitting detection caused by the switch SX when failing to be closed (ON).

## Claims

1. A sitting sensor (1) for detecting a sitting on a seat (5) of a vehicle, the sitting sensor (1) comprising:
a positive conductive wire (15);
a negative conductive wire (16); and
a switch group including a plurality of switches (S1-S6), which are distributed on a sitting surface of the seat (5) and supplied with power through the positive conductive wire (15) and the negative conductive wire (16), the switches (S1-S6) being ON/OFF responding to a sitting load exerted on the sitting surface to generate sitting signals,
wherein the switch group has at least one parallel switch unit which includes at least two of the switches (S1-S6) and at least one series switch unit which includes at least one of the other switches (S1-S6), the switches of the parallel switch unit being connected with each other in parallel, the parallel switch unit being connected with the series switch unit in series,
**characterized in that**
a distance between the switch of the series switch unit and the switch of the parallel switch unit which is adjacent to the switch of the series switch unit is smaller than a distance between the switches of the parallel switch unit which are adjacent to each other.

2. The sitting sensor (1) according to claim 1, wherein
the switch of the series switch unit is surrounded by the switches of the parallel switch unit and arranged at an approximately central portion of the sitting surface.

3. The sitting sensor (1) according to claim 1, wherein
the switch group has the plurality of series switch units, each of which includes at least two of the switches (S1-S6), the switches of the series switch unit being connected with each other in series, the series switch units being connected with each other in parallel.

4. The sitting sensor (1) according to claim 1, wherein
the switch group has a plurality of parallel switch units, each of which includes at least two of the switches (S1-S6), the switches of the parallel switch unit being connected with each other in parallel, the parallel switch units being connected with each other in series.

5. The sitting sensor (1) according to any one of claims 1-4, further comprising:
at least one floating conductive wire (4S, 4S');
a first film (8);
a spacer film (10) having an opening; and
a second film (9) which is partially electrically insulated from the first film (8) by the spacer film (10),
wherein the switches (S1-S6) includes floating contact point portions (45-49, 51) which are connected with the floating conductive wire (4S, 4S'), and contact point portions (40-44, 50) which are connected with the positive and negative conductive wires (15, 16);
the contact point portions (40-44, 50) of the switches (S1-S6), the positive and negative conductive wires (15, 16) are formed at the first film (8);
the floating contact point portions (45-49, 51) of the switches (S1-S6) and the floating conductive wire (4S, 4S') are formed at the second film (9); and
the contact point portion (40-44, 50) is capable of contacting the corresponding floating contact point portion (45-49, 51) through the opening of the spacer film (10) responding to the sitting load exerted on the sitting surface.

6. The sitting sensor (1) according to any one of claims 1-5, wherein
the seat (5) is an assistant seat, at which the switches (S1-S6) are mounted.

7. The sitting sensor (1) according to claim 1 or 2, wherein
the switch of the series switch unit has a smaller load threshold value than that of the switch of the parallel switch unit.

8. The sitting sensor (1) according claim 1 or 2, wherein
the switch of the series switch unit has a larger area than that of the switch of the parallel switch unit.

9. The sitting sensor (1) according to claim 5, wherein
the second film (9) is arranged at an upper side of the first film (8).

## Patentansprüche

1. Sitzbelegungssensor (1) zum Erfassen der Belegung eines Sitzes (5) eines Fahrzeugs, wobei der Sitzbelegungssensor (1) aufweist:
einen positiven Leitungsdraht (15);
einen negativen Leitungsdraht (16); und
eine Schaltergruppe mit einer Mehrzahl von Schaltern (S1-S6), die auf einer Sitzfläche des Sitzes (5) verteilt sind und über den positiven Leitungsdraht (15) und den negativen Leitungsdraht (16) mit Leistung versorgt werden, wobei die Schalter (S1-S6) im Ansprechen auf eine Sitzbelegungslast, die auf die Sitzfläche ausgeübt wird, einen EIN/AUS-Zustand einnehmen, um Sitzbelegungssignale zu erzeugen,
wobei die Schaltergruppe mindestens eine parallele Schaltereinheit aufweist, die mindestens einen der Schalter (S1-S6) enthält, und mindestens eine serielle Schaltereinheit aufweist, die mindestens einen der anderen Schalter (S1-S6) enthält, wobei die Schalter der parallelen Schaltereinheit parallel miteinander verbunden sind, und die parallele Schaltereinheit mit der seriellen Schaltereinheit in Serie verbunden ist,
**dadurch gekennzeichnet, dass**
ein Abstand zwischen dem Schalter der seriellen Schaltereinheit und dem benachbart zu dem Schalter der seriellen Schaltereinheit befindlichen Schalter der parallelen Schaltereinheit kleiner als ein Abstand zwischen den benachbart zueinander befindlichen Schaltern der parallelen Schaltereinheit ist.

2. Sitzbelegungssensor (1) nach Anspruch 1, wobei
der Schalter der seriellen Schaltereinheit von den Schaltern der parallelen Schaltereinheit umgeben und in einem annähernd mittigen Abschnitt der Sitzfläche angeordnet ist.

3. Sitzbelegungssensor (1) nach Anspruch 1, wobei
die Schaltergruppe eine Mehrzahl von seriellen Schaltereinheiten aufweist, die jeweils mindestens zwei der Schalter (S1-S6) enthalten, wobei die Schalter der seriellen Schaltereinheit in Serie miteinander verbunden sind, und die seriellen Schaltereinheiten parallel miteinander verbunden sind.

4. Sitzbelegungssensor (1) nach Anspruch 1, wobei
die Schaltergruppe eine Mehrzahl von parallelen Schaltereinheiten aufweist, die jeweils mindestens zwei der Schalter (S1-S6) enthalten, wobei die Schalter der parallelen Schaltereinheit parallel miteinander verbunden sind, und die parallelen Schaltereinheiten in Serie miteinander verbunden sind.

5. Sitzbelegungssensor (1) nach einem der Ansprüche 1-4, welcher ferner aufweist:
mindestens einen schwebenden Leitungsdraht (4S, 4S');
eine erste Folie (8);
eine Beabstandungsfolie (10), die eine Öffnung aufweist; und
eine zweite Folie (9), die durch die Beabstandungsfolie (10) teilweise von der ersten Folie (8) elektrisch isoliert ist,
wobei die Schalter (S1-S6) schwebende Kontaktpunktabschnitte (45-49, 51) aufweisen, die mit dem schwebenden Leitungsdraht (4S, 4S') verbunden sind, und Kontaktpunktabschnitte (40-44, 50) aufweisen, die mit dem positiven und dem negativen Leitungsdraht (15, 16) verbunden sind;
die Kontaktpunktabschnitte (40-44, 50) der Schalter (S1-S6) und der positive und der negative Leitungsdraht (15, 16) an der ersten Folie (8) ausgebildet sind;
die schwebenden Kontaktpunktabschnitte (45-49, 51) der Schalter (S1-S6) und der schwebende Leitungsdraht (4S, 4S') an der zweiten Folie (9) ausgebildet sind; und
der Kontaktpunktabschnitt (40-44, 50) in der Lage ist, den entsprechenden schwebenden Kontaktpunktabschnitt (45-49, 51) im Ansprechen auf die auf die Sitzfläche ausgeübte Sitzbelegungslast durch die Öffnung der Beabstandungsfolie (10) zu kontaktieren.

6. Sitzbelegungssensor (1) nach einem der Ansprüche 1-5, wobei
der Sitz (5) ein Beifahrersitz ist, an dem die Schalter (S1-S6) montiert sind.

7. Sitzbelegungssensor (1) nach Anspruch 1 oder 2, wobei
der Schalter der seriellen Schaltereinheit einen kleineren Lastschwellwert besitzt als der Schalter der parallelen Schaltereinheit.

8. Sitzbelegungssensor (1) nach Anspruch 1 oder 2, wobei
der Schalter der seriellen Schaltereinheit eine größere Fläche besitzt als der Schalter der parallelen Schaltereinheit.

9. Sitzbelegungssensor (1) nach Anspruch 5, wobei
die zweite Folie (9) auf einer oberen Seite der ersten Folie (8) angeordnet ist.

## Revendications

1. Détecteur d'assise (1) pour détecter une assise sur un siège (5) d'un véhicule, le détecteur d'assise (1) comprenant :
un fil conducteur positif (15);
un fil conducteur négatif (16); et
un groupe de commutateurs incluant une pluralité de commutateurs (S1-S6), qui sont distribués sur une surface d'assise du siège (5) et alimentés avec une alimentation électrique à travers le fil conducteur positif (15) et le fil conducteur négatif (16), les commutateurs (S1-S6) étant EN MARCHE/A L'ARRET réagissant à une charge d'assise exercée sur la surface d'assise pour générer des signaux d'assise,
dans lequel le groupe de commutateurs a au moins une unité de commutateurs parallèles qui inclut au moins deux des commutateurs (S1-S6) et au moins une unité de commutateurs en série qui inclut au moins l'un des autres commutateurs (S1-S6), les commutateurs de l'unité de commutateurs parallèles étant connectés les uns avec les autres en parallèle, l'unité de commutateurs parallèles étant connectée en série avec l'unité de commutateurs en série,
**caractérisé en ce que**
une distance entre le commutateur de l'unité de commutateurs en série et le commutateur de l'unité de commutateurs parallèles qui est adjacent au commutateur de l'unité de commutateurs en série est plus petite qu'une distance entre les commutateurs de l'unité de commutateurs parallèles qui sont adjacents les uns aux autres.

2. Détecteur d'assise (1) selon la revendication 1, dans lequel
le commutateur de l'unité de commutateurs en série est entouré par les commutateurs de l'unité de commutateurs parallèles et agencé à une position approximativement centrale de la surface d'assise.

3. Détecteur d'assise (1) selon la revendication 1, dans lequel
le groupe de commutateurs a la pluralité d'unités de commutateurs en série, chacune desquelles inclut au moins deux des commutateurs (S1-S6), les commutateurs de l'unité de commutateurs en série étant connectés les uns avec les autres en série, les unités de commutateurs en série étant connectées les unes avec les autres en parallèle.

4. Détecteur d'assise (1) selon la revendication 1, dans lequel
le groupe de commutateurs a une pluralité d'unités de commutateurs parallèles, chacune desquelles inclut au moins deux des commutateurs (S1-S6), les commutateurs de l'unité de commutateurs parallèles étant connectés les uns avec les autres en parallèle, les unités de commutateurs parallèles étant connectées les unes avec les autres en série.

5. Détecteur d'assise (1) selon l'une quelconque des revendications 1-4, comprenant en plus:
au moins un fil conducteur flottant (4S, 4S');
un premier film (8);
un film d'espacement (10) ayant une ouverture ; et
un deuxième film (9) qui est partiellement électriquement isolé du premier film (8) par le film d'espacement (10),
où les commutateurs (S1-S6) incluent des portions de points de contact flottantes (45-49, 51) qui sont connectées avec le fil conducteur flottant (4S, 4S'), et des portions de points de contact (40-44, 50) qui sont connectées avec les fils conducteurs positif et négatif (15, 16) ;
les portions de points de contact (40-44, 50) des commutateurs (S1, S6), les fils conducteurs positif et négatif (15, 16) sont formés au niveau du premier film (8) ;
les portions de points de contact flottantes (45-49, 51) des commutateurs (S1, S6) et le fil conducteur flottant (4S, 4S') sont formés au niveau du deuxième film (9) ; et
la portion de point de contact (40-44, 50) est capable de rentrer en contact avec la portion de point de contact flottante (45-49, 51) correspondante à travers l'ouverture du film d'espacement (10) réagissant à la charge d'assise exercée sur la surface d'assise.

6. Détecteur d'assise (1) selon l'une quelconque des revendications 1-5, dans lequel
le siège (5) est un siège assistant, auquel les commutateurs (S1-S6) sont montés.

7. Détecteur d'assise (1) selon la revendication 1 ou 2, dans lequel
le commutateur de l'unité de commutateurs en série a une valeur seuil de charge plus petite que celle du commutateur de l'unité de commutateurs parallèles.

8. Détecteur d'assise (1) selon la revendication 1 ou 2, dans lequel
le commutateur de l'unité de commutateurs en série a une superficie plus grande que celle du commutateur de l'unité de commutateurs parallèles.

9. Détecteur d'assise (1) selon la revendication 5, dans lequel
le deuxième film (9) est agencé à un côté supérieur du premier film (8).
